# EUROPÄISCHE PATENTSCHRIFT

(11) **EP 3 257 113 B1**
(45) Veröffentlichungstag und Bekanntmachung des Hinweises auf die Patenterteilung: **02.01.2019**
(21) Anmeldenummer: 17720684.4
(22) Anmeldetag: 02.05.2017
(51) Int. Cl.: H01R 13/641, H01R 13/53, H01R 13/14, B60L 3/04, H01R 13/703

(54) **HVIL-SYSTEM**
HVIL SYSTEM
SYSTÈME HVIL

(30) Priorität: 04.05.2016 DE 102016005510
(43) Veröffentlichungstag der Anmeldung: 20.12.2017
(73) Patentinhaber: Rosenberger Hochfrequenztechnik GmbH & Co. KG, 83413 Fridolfing (DE)
(72) Erfinder: BLAKBORN, Willem, 83334 Inzell (DE)
(86) Internationale Anmeldenummer: PCT/EP2017/000546
(87) Internationale Veröffentlichungsnummer: WO 2017/190833

(56) Entgegenhaltungen:
- EP-A1- 2 621 028
- WO-A1-2010/068293
- DE-B3-102007 010 515
- GB-A- 466 205
- US-A- 4 148 536
- US-A- 5 554 893
- US-A1- 2014 273 628
- US-B1- 7 641 499

## Beschreibung

### GEBIET DER ERFINDUNG

Die vorliegende Erfindung betrifft einen HV-Steckverbinder, insbesondere in einem Kraftfahrzeug, welcher eingerichtet ist, HV-Strom von dem HV-Steckverbinder auf eine weitere Komponente zu übertragen.

Im Folgenden steht "HV" für "hochvolt-" und HVIL für "high voltage interlock system".

### TECHNISCHER HINTERGRUND

Hybrid-, Elektro- und Brennstoffzellenfahrzeuge verwenden im Allgemeinen ein elektrisches Hochspannungssystem, welches mindestens eine Hochspannungsenergiequelle umfasst, wie zum Beispiel eine Batterie, eine Brennstoffzelle, einen Generator oder dergleichen. Bevor eine Person (z. B. ein Techniker) in physikalischen Kontakt mit einer stromführenden Komponente des elektrischen Systems (z. B. den Verriegelungsverbindungsanschlüssen) kommen kann, sollte die Hochspannungsenergiequelle getrennt und jegliche lokal gespeicherte elektrische Energie entladen sein. Aus diesem Grund kann das elektrische Hochspannungssystem ein Hochspannungsverriegelungs-System (HVIL-System, HVIL von high voltage interlock loop) verwenden, die eine Entladung (oder Trennung) von der Energiequelle einleitet, wenn ein Zugriffsversuch auf die Verriegelungsverbindungsanschlüsse detektiert wird.

Die US 4,148,536 zeigt einen Steckverbinder, welcher eingerichtet ist, Strom von dem Steckverbinder auf eine weitere Komponente zu übertragen, wobei der Steckverbinder ein Federelement aufweist, wobei der Steckverbinder Leistungskontakte aufweist, und wobei das erste Federelement in einem gesteckten Zustand des Steckverbinders derart verformt ist, dass die Leistungskontakte einander kontaktieren, derart dass der Steckverbinder sicherstellt, dass Strom von dem Steckverbinder auf die weitere Komponente übertragen wird, sofern die Verbindung zwischen dem Steckverbinder und der weiteren Komponente gesichert ist.

### ZUSAMMENFASSUNG DER ERFINDUNG

Vor diesem Hintergrund liegt der vorliegenden Erfindung die Aufgabe zugrunde, einen HV-Steckverbinder mit einem HVIL-System mit einer Kinematik anzugeben.

Erfindungsgemäß wird diese Aufgabe durch einen HV-Steckverbinder mit den Merkmalen des Patentanspruchs 1.

Patentanspruch 12 offenbart ein Herstellungsverfahren des vorigen HV-Steckverbinders. Die der vorliegenden Erfindung zugrunde liegende Idee besteht darin, ein HVIL-System zu schaffen, welches bezüglich der Leistungskontakte aufgrund einer Kinematik nacheilend ausgebildet ist. Nacheilend bezüglich der Leistungskontakte bedeutet, dass zuerst ein Kontakt zwischen den Leistungskontakten hergestellt wird und die HVIL-Kontaktelemente nach der Kontaktierung der Leistungskontakte kontaktiert werden. Durch das Nacheilen aufgrund der Steckerkinematik wird ein HVIL-System, welches weitgehend unabhängig von geometrischen Fehlertoleranzen wirkt, geschaffen.

Gemäß der Erfindung weist die HV-Steckverbindung einen kabelseitigen Verbinder und einen aggregatseitigen Verbinder auf, wobei das HVIL-System ein drittes HVIL-Kontaktelement in dem aggregatseitigem Verbinder aufweist, wobei das dritte HVIL-Kontaktelement eingerichtet ist, das erste HVIL-Kontaktelement zu kontaktieren und mit einer Erkennungseinrichtung zur Überprüfung eines Kontakts zwischen dem ersten HVIL-Kontaktelement und dem zweiten HVIL-Kontaktelement sowie zwischen dem ersten HVIL-Kontaktelement und dem dritten HVIL-Kontaktelement verbunden ist. Auf diese Weise sind die Kabelseite sowie die Aggregatseite der HV-Steckverbindung über das HVIL-System verbunden, so dass ein Trennen der HV-Verbindung auch auf der Aggregatseite besonders einfach detektiert werden kann.

Es versteht sich, dass die Bestandteile des HVIL-Systems keineswegs in einem einzigen Verbinder einer HV-Steckverbindung ausgebildet sind. Vielmehr können die Bestandteile anwendungsspezifisch in einem ersten Verbinder und einem zweiten Verbinder einer HV-Steckverbindung angeordnet sein. Beispielsweise ist es möglich, das erste Federelement in einem kabelseitigem oder in einem aggregatseitigen Verbinder auszubilden.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Gemäß einer bevorzugten Ausführungsform der Erfindung ist das zweite HVIL-Kontaktelement als zweites Federelement, insbesondere als Blattfeder, ausgebildet. Somit drückt das erste HVIL-Kontaktelement gegen das zweite HVIL-Kontaktelement. Dies stellt einen robusten Kontakt sicher und gewährleistet zudem einen Ausgleich von Fertigungstoleranzen zwischen dem ersten und dem zweiten HVIL-Kontaktelement.

Gemäß einer weiteren bevorzugten Ausführungsform der Erfindung weist die HV-Steckverbindung einen kabelseitigen Verbinder und einen aggregatseitigen Verbinder auf, wobei das erste HVIL-Kontaktelement, das zweite HVIL-Kontaktelement und das erste Federelement in dem kabelseitigen Verbinder angeordnet sind. Auf diese Weise wird der aggregatseitige Anschluss vereinfacht. Zudem ist die kabelseitige Anordnung der federnden Elemente besonders benutzerfreundlich.

Gemäß einer weiteren bevorzugten Ausführungsform der Erfindung ist das dritte HVIL-Kontaktelement in einer Buchse ausgebildet. Folglich ist das erste HVIL-Kontaktelement zu der Buchse als männliches HVIL-Kontaktelement ausgebildet. Hierdurch ist eine besonders robuste Verbindung und sichere Findung des ersten und des dritten HVIL-Kontaktelements sichergestellt.

Gemäß einer weiteren bevorzugten Ausführungsform der Erfindung ist das erste HVIL-Kontaktelement im Wesentlichen L-Förmig oder stiftförmig ausgebildet. Die L-Form oder Stiftform gewährleistet, dass das erste HVIL-Kontaktelement sowohl ein männliches HVIL-Kontaktelement als auch ein flächiges HVIL-Kontaktelement bildet. Insbesondere ist es zweckmäßig, dass das erste HVIL-Kontaktelement einen ersten männlichen Kontaktbereich sowie einen zweiten Kontaktbereich zur Herstellung eines flächigen Kontakts aufweist.

Gemäß einer weiteren bevorzugten Ausführungsform der Erfindung ist das erste und/oder zweite HVIL-Kontaktelement horizontal versetzt zu dem ersten Federelement ausgebildet. Auf diese Weise lässt sich die Bauhöhe einer HV-Steckverbindung mit einem erfindungsgemäßen HVIL-System reduzieren.

Gemäß einer weiteren bevorzugten Ausführungsform der Erfindung ist das erste HVIL-Kontaktelement und das zweite HVIL-Kontaktelement zwischen zwei oder vier ersten Federelementen ausgebildet. Auf diese Weise kann ein HVIL-System die Leistungskontakte in einem zweipoligen oder vierpoligen Verbinder überwachen.

Gemäß einer weiteren bevorzugten Ausführungsform der Erfindung weist das erste Federelement eine Blattfeder, eine Spiralfeder und/oder einen Elastomerblock auf.

Gemäß einer weiteren bevorzugten Ausführungsform der Erfindung weist die HV-Steckverbindung einen kabelseitigen Verbinder und einen aggregatseitigen Verbinder auf, wobei der kabelseitige Verbinder und/oder der aggregatseitige Verbinder einen Haltemechanismus aufweist, dessen Haltekraft zumindest der Gewichtskraft des Kabelseitigen Verbinders entspricht. Somit verhindert der Haltemechanismus, dass eine versteckte, unverriegelte HV-Steckverbindung auseinanderfällt. Eine Gefahr des Auseinanderfallens besteht insbesondere wenn der kabelseitige Verbinder von unten mit dem aggregatseitigem Verbinder verbunden ist.

Folglich ist sichergestellt, dass die HV-Steckverbindung auch nach dem Lösen einer Verriegelung manuell getrennt werden muss. Dies verzögert das Trennen der HV-Steckverbindung um wenige Sekunden. Diese Verzögerung gewährleistet, dass die Leistungskontakte nach dem Trennen der HVIL-Kontakte soweit entladen sind, dass für einen Benutzer keine Verletzungsgefahr besteht.

Gemäß einer weiteren bevorzugten Ausführungsform der Erfindung weist der Haltemechanismus eine Dichtung und ein Schirmelement auf. Optional kann ein Schnappmechanismus vorgesehen sein, welcher die Haltekraft des Haltemechanismus weiter erhöht.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Im Folgenden werden die Figuren zusammenhängend und übergreifend beschrieben.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Schnittsicht einer Ausführungsform eines erfindungsgemäßen HVIL-System in einer HV-Steckverbindung;
- Fig. 2: eine Schnittsicht einer Ausführungsform eines erfindungsgemäßen HVIL-System in einer HV-Steckverbindung;
- Fig. 3: eine Schnittsicht einer Ausführungsform eines erfindungsgemäßen HVIL-System in einer HV-Steckverbindung;

- Fig. 4: eine Schnittsicht einer Ausführungsform eines erfindungsgemäßen HVIL-System in einer HV-Steckverbindung;
- Fig. 5: eine Draufsicht eines HV-Verbinders gemäß einer der Figuren 1-4;

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

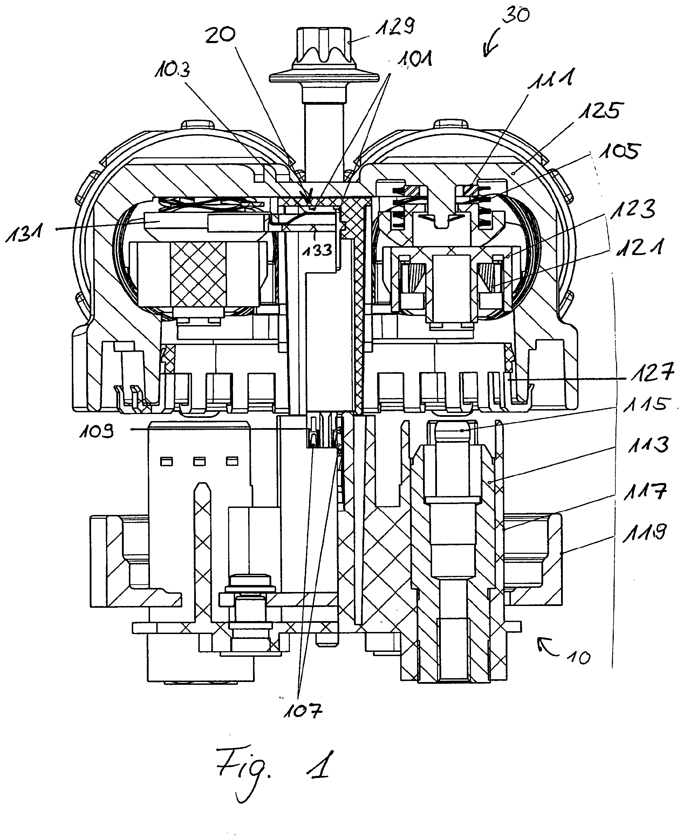

Die Figuren 1-4 zeigen jeweils eine Ausführungsform einer erfindungsgemäßen Steckverbindung nach verschiedenen Verfahrensschritten des Versteckens.

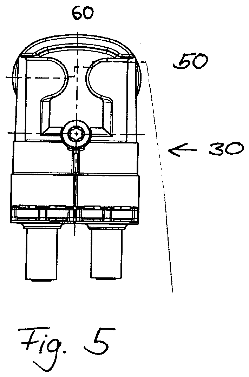

Figur 5 zeigt eine Draufsicht eines erfindungsgemäßen kabelseitigen Verbinders 30. Zugleich illustriert Figur 5 durch die Schnittlinie 50 den Verlauf der Schnittlinie in den Figuren 1-4.

Figur 1 zeigt einen aggregatseitigen Verbinder 10 und einen kabelseitigen Verbinder 30 vor dem Verstecken. Üblicherweise ist der aggregatseitige Verbinder 10 an einem unbeweglichen System angebracht. Der kabelseitigen Verbinder 30 ist entsprechend der Kabellänge und Kabelflexibilität beweglich.

Die HV-Steckverbindung gemäß der Figuren 1-4 weist ein HVIL-System 20 auf. In der vorliegenden Ausführungsform ist ein Großteil der Funktionalität des HVIL-Systems in dem kabelseitigen Verbinder ausgebildet. Es ist jedoch denkbar, die Funktionalitäten von dem kabelseitigen Verbinder 30 auf den aggregatseitigen Verbinder 10 und umgekehrt zu spiegeln bzw. Funktionalitäten anders zwischen dem kabelseitigen Verbinder 30 und dem aggregatseitigen Verbinder 10 zu verteilen.

Bei der dargestellten HV-Steckverbindung handelt es sich um eine zweipolige Steckverbindung. Die zweipolige Steckverbindung ist bezüglich der Symmetrieachse 60 symmetrisch ausgebildet. Die Symmetrie ist jedoch in den Figuren aufgrund der besonderen Schnittlinie 50 gemäß Figur 5 nicht dargestellt.

Zur Vereinfachung wird im Folgenden lediglich auf eine Kontaktanordnung Bezug genommen, obgleich eine zweipolige Steckverbindung dargestellt ist.

Sowohl der kabelseitige Verbinder 30 als auch der aggregatseitige Verbinder 10 weisen Leistungskontakte 121 und 113 auf. Die Leistungskontakte 121 und 113 sind jeweils zwischen einem inneren Berührschutz und einem äußeren Berührschutz ausgebildet. In dem aggregatseitigem Verbinder 10 ist der innere Berührschutz 115 als Berührschutzpin ausgebildet und der äußere Berührschutz 117 ist als isolierende Wandung 117 ausgebildet. In dem kabelseitigen Verbinder 30 ist der Berührschutz 123 als einteiliges Isolierteil, welches zugleich den inneren und den äußeren Berührschutz bildet, ausgebildet. Der Berührschutz ist geometrisch derart ausgelegt, dass ein Prüffinger nicht mit den Leistungskontakten 113 und 121 in Kontakt kommen kann.

Der kabelseitige Verbinder 30 weist an jedem Pol ein erstes Federelement 105, welches als Spiralfeder ausgebildet ist auf. Die Feder 105 ist in eine ringförmige Ausnehmung des Flanschs 131 eingesetzt und ist über diesen mit dem Isolierteil 123 indirekt verbunden. Die beiden Flansche 131 der beiden Pole sind miteinander über einen Steg 133 verbunden. Zu dem Steg 133 gegenüberliegend ist das erste HVIL-Kontaktelement 101, welches in dieser Ausführungsform zwei L-förmige Kontakte aufweist, ausgebildet. Auf dem Steg 133 ist das zweite HVIL-Kontaktelement 103 ausgebildet. In der dargestellten Ausführungsformen ist das zweite HVIL-Kontaktelement 103 als Blattfeder ausgebildet.

Der aggregatseitige Verbinder 10 weist zudem ein drittes HVIL-Kontaktelement 107 auf. Das dritte HVIL-Kontaktelement 107 weist zwei Kontakte auf, welche in einer Buchse angeordnet sind, auf.

Zum Schließen der HVIL-Brücke, d.h. dass HVIL-System gibt die Stromverbindung zwischen den Leistungskontaktelementen 113 und 121 frei, ist es erforderlich, dass sowohl das erste HVIL-Kontaktelement 101 das zweite HVIL-Kontaktelement 103 als auch das erste HVIL-Kontaktelement 101 das dritte HVIL-Kontaktelement 107 kontaktiert.

Figur 1 zeigt die Verbinder 10 und 30 vor dem Verstecken. In dem dargestellten Zustand kontaktieren die HVIL-Kontaktelemente 101, 103 und 107 nicht. Folglich ist die HVIL-Brücke geöffnet. Zudem kontaktieren die Leistungskontakte 113 und 121 nicht. Die Befestigungsschraube 129 befindet sich in einer gelösten Position.

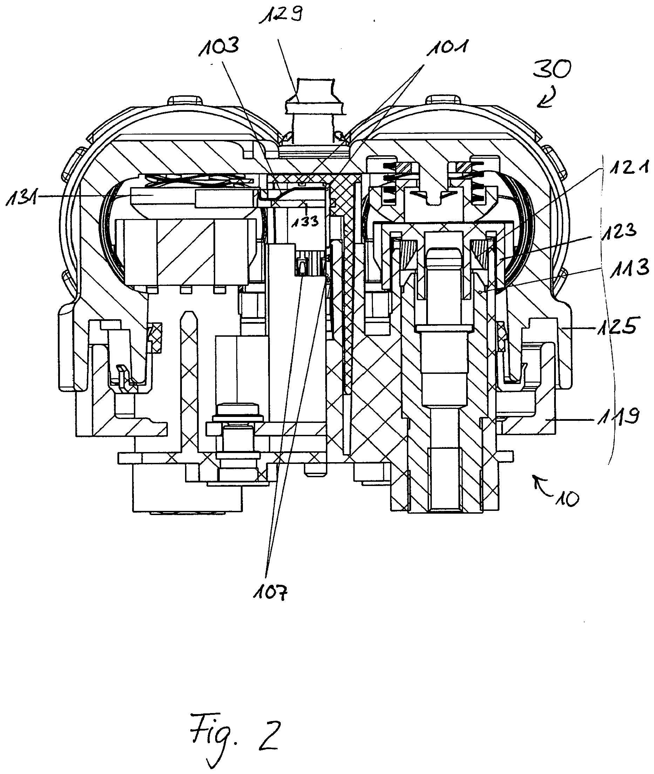

Figur 2 zeigt die HV-Steckverbindung gemäß Figur 1 unmittelbar bevor ein Kontakt zwischen den Leistungskontakten 121 und 113 hergestellt wird. Dementsprechend ist dargestellt, dass sich die Gehäuse 119 und 125 der Verbinder 30 und 10 bereits gefunden haben. Dennoch ist eine Verbindung zur Stromübertragung noch nicht hergestellt, indem die HVIL-Kontaktelemente 101, 103 und 107 und die Leistungskontakte 121 und 113 sich nicht berühren. Die Befestigungsschraube 129 ist zwar bereits in einer Bohrung eingeschraubt, jedoch befindet sich die Befestigungsschraube 129 nicht in ihrer Endposition.

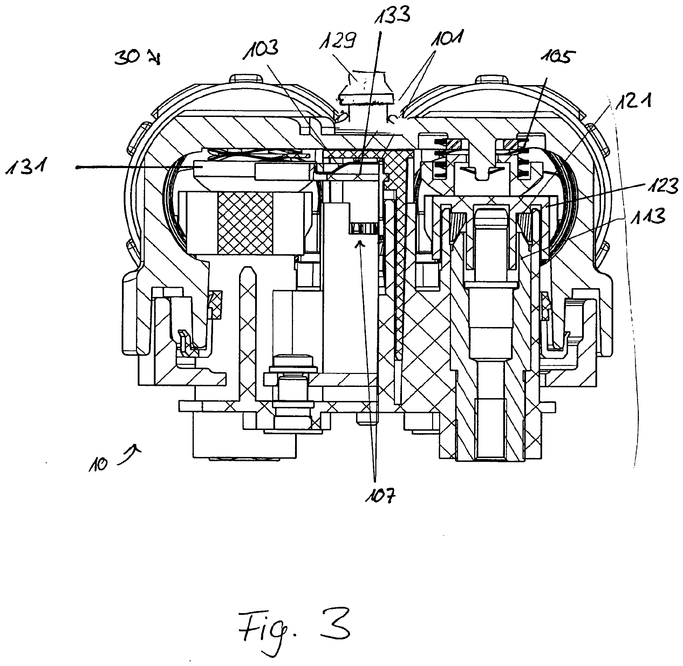

In Figur 3 ist die Befestigungsschraube 129 nahezu vollständig in einer Bohrung in den Verbindern 10 und 30 eingeschraubt. Aufgrund dessen kontaktieren sich die Leistungskontakte 121 und 113. Eine Stromverbindung zwischen den Leistungskontakten 121 und 113 ist jedoch noch nicht hergestellt.

Dadurch, dass die Befestigungsschraube 129 bereits nahezu vollständig in den Verbinder 10 und in den Verbinder 30 eingeschraubt ist, ist die Feder 105 komprimiert, so dass die Feder 105 über den Flansch 131 eine Druckkraft in Richtung des aggregatseitigen Verbinders 10 ausübt und die Leistungskontakte 121 und 113 gegeneinander gedrückt werden. Durch die Komprimierung der Feder 105 hebt sich zudem der Flansch 131.

Aufgrund der Komprimierung der Feder 105 bzw. der Verschiebung des Stegs 133 kontaktieren sich in Figur 3 das erste HVIL-Kontaktelement 101 und das zweite HVIL-Kontaktelement 103. Die HVIL-Brücke ist jedoch nach wie vor noch nicht geschlossen, da das erste HVIL-Kontaktelement 101 das dritte HVIL-Kontaktelement 107 nicht kontaktiert, sodass über die Leistungskontakte 113 und 121 kein Strom übertragbar ist.

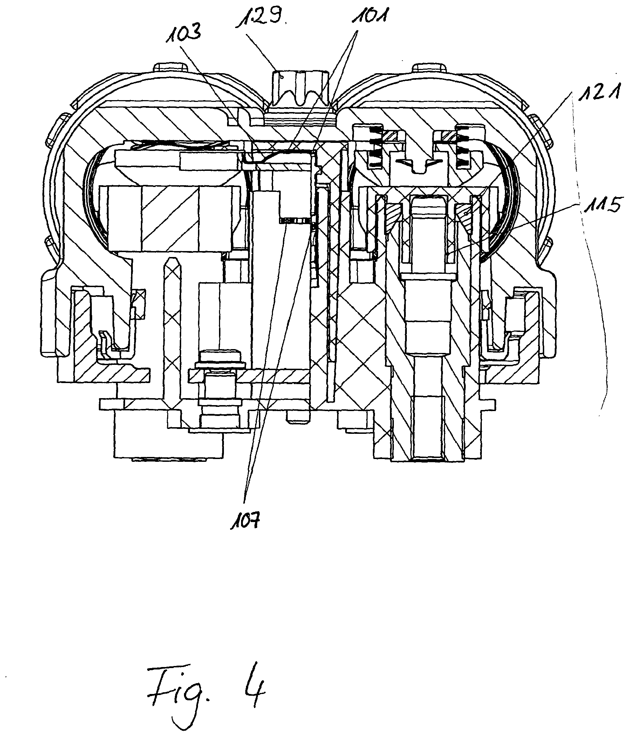

Figur 4 zeigt die HV-Steckverbindung in einem vollständig versteckten, verriegelten Zustand, indem sich die Befestigungsschraube 129 in ihrer Endposition befindet. Dementsprechend berühren sich die Leistungskontakte 121 und 113, die HVIL-Kontaktelemente 101 und 103 sowie die HVIL-Kontaktelemente 101 und 107. Folglich ist die HVIL-Brücke geschlossen und zwischen den Leistungskontakten 121 und 113 kann HV-Strom übertragen werden.

Es versteht sich, dass die Reihenfolge der Kontaktierung der HVIL-Kontaktelemente auch von einem Benutzer abhängt. So kontaktiert das erste HVIL-Kontaktelement 101 das zweite HVIL-Kontaktelement zuerst, sofern der Benutzer beim Verstecken so viel Handkraft anwendet, dass die Feder 105 komprimiert wird. Dementgegen werden sich das erste HVIL-Kontaktelement 101 und das dritte HVIL-Kontaktelement 107 erst kontaktieren, nachdem sich die Schraube 129 in ihrer Endposition befindet.

Andererseits kann ein Benutzer die Verbinder 101 und 103 auch mit geringer Handkraft kontaktieren, so dass die Feder 105 nicht komprimiert ist und die Verbinder 101 und 103 lediglich aufeinander aufliegen. In diesem Fall wird sowohl der Kontakt zwischen dem ersten HVIL-Kontaktelement 101 und dem dritten HVIL-Kontaktelement 103 als auch der Kontakt zwischen dem ersten HVIL-Kontaktelement 101 und dem dritten HVIL-Kontaktelement 107 hergestellt, sobald sich die Schraube 129 in ihrer Endposition befindet.

Das Lösen der HV-Steckverbindung erfolgt dementsprechend. Dabei wird zunächst die Befestigungsschraube 129 gelöst, woraufhin sich die Feder 105 ausdehnt. Folglich entfernt sich der Steg 133, auf welchem das zweite Kontaktelement 103 angebracht ist, von dem ersten HVIL-Kontaktelement 101, sodass sich die HVIL-Kontaktelemente 101 und 103 nicht länger kontaktieren und die HVIL-Brücke geöffnet ist, sobald sich die Schraube 129 nicht mehr in ihrer Endposition befindet.

Nachdem die Befestigungsschraube 129 vollständig aus der Bohrung des aggregatseitigen Verbinders 10 herausgeschraubt wurde, wird die HV-Steckverbindung von einem Haltemechanismus, welcher ein unbeabsichtigtes Auseinanderfallen des aggregatseitigen Verbinders 10 und des kabelseitigen Verbinders 30 verhindert, zusammengehalten. Somit kann der Verbinder 30 von Hand von dem aggregatseitigen Verbinder 10 abgenommen werden. Dabei vergeht zwischen dem Aufschrauben der Befestigungsschraube 129 und dem händischen Abnehmen des Verbinders 30 so viel Zeit, dass die Leistungskontakte 121 und 113 vollständig entladen werden.

### Bezugszeichenliste

- 10: aggregatseitiger Verbinder
- 20: HVIL-System
- 30: kabelseitiger HV-Steckverbinder
- 50: Schnittlinie
- 60: Symmetrieachse
- 101: erstes HVIL-Kontaktelement
- 103: zweites HVIL-Kontaktelement
- 105: erstes Federelement
- 107: drittes HVIL-Kontaktelement
- 109: Buchse
- 111: Elastomerblock
- 113: erster Leistungskontakt
- 115: innerer Berührschutz
- 117: äußerer Berührschutz
- 119: Gehäuse
- 121: zweiter Leistungskontakt
- 123: Berührschutz
- 125: Gehäuse
- 127: Schirmelement
- 129: Schraube
- 131: Flansch
- 133: Steg

## Patentansprüche

1. HV-Steckverbinder (30), insbesondere für ein Kraftfahrzeug, welcher eingerichtet ist, HV-Strom von dem HV-Steckverbinder auf eine weitere Komponente zu übertragen, mit einem HVIL-System (20), einem kabelseitigen Verbinder (30) und mit einem aggregatseitigen Verbinder (10)
wobei das HVIL-System ein erstes HVIL-Kontaktelement (101) und ein zweites HVIL-Kontaktelement (103) aufweist, wobei das erste HVIL-Kontaktelement in einem nicht gestecktem Zustand des HV-Steckverbinders von dem zweiten HVIL-Kontaktelement durch wenigstens ein erstes Federelement (105) beabstandet ist,
wobei das HVIL-System Leistungskontakte (121, 113) aufweist, wobei die HVIL-Kontaktelemente nach der Kontaktierung der Leistungskontakte kontaktiert werden, und wobei das erste Federelement in einem gesteckten Zustand des HV-Steckverbinders derart verformt ist, dass das erste HVIL-Kontaktelement das zweite HVIL-Kontaktelement kontaktiert,
derart dass das HVIL-System sicherstellt, dass HV-Strom von dem HV-Steckverbinder auf die weitere Komponente übertragen wird, sofern die Verbindung zwischen dem HV-Steckverbinder und der weiteren Komponente gesichert ist, **dadurch gekennzeichnet, dass** das HVIL-System ein drittes HVIL-Kontaktelement (107) in dem aggregatseitigem Verbinder aufweist, wobei das dritte HVIL-Kontaktelement eingerichtet ist, das erste HVIL-Kontaktelement zu kontaktieren und mit einer Erkennungseinrichtung zur Überprüfung eines Kontakts zwischen dem ersten HVIL-Kontaktelement und dem zweiten HVIL-Kontaktelement sowie zwischen dem ersten HVIL-Kontaktelement und dem dritten HVIL-Kontaktelement verbunden ist.

2. HV-Steckverbinder nach Anspruch 1, wobei das zweite HVIL-Kontaktelement als zweites Federelement, insbesondere als Blattfeder, ausgebildet ist.

3. HV-Steckverbinder nach einem der vorstehenden Ansprüche, wobei die HV-Steckverbindung einen kabelseitigen Verbinder (30) und einen aggregatseitigen Verbinder (10) aufweist und wobei das erste HVIL-Kontaktelement, das zweite HVIL-Kontaktelement und das erste Federelement in dem kabelseitigen Verbinder angeordnet sind.

4. HV-Steckverbinder nach einem der vorstehenden Ansprüche, wobei das dritte HVIL-Kontaktelement in einer Buchse (109) ausgebildet ist.

5. HV-Steckverbinder nach einem der vorstehenden Ansprüche, wobei das erste HVIL-Kontaktelement im Wesentlichen L-Förmig oder stiftförmig ausgebildet ist.

6. HV-Steckverbinder nach einem der vorstehenden Ansprüche, wobei das erste und/oder zweite HVIL-Kontaktelement horizontal versetzt zu dem ersten Federelement ausgebildet ist.

7. HV-Steckverbinder nach einem der vorstehenden Ansprüche, wobei das erste HVIL-Kontaktelement und das zweite HVIL-Kontaktelement zwischen zwei oder vier ersten Federelementen ausgebildet sind.

8. HV-Steckverbinder nach einem der vorstehenden Ansprüche wobei das erste Federelement eine Blattfeder, eine Spiralfeder und/oder einen Elastomerblock (111) aufweist.

9. HV-Steckverbinder nach einem der vorstehenden Ansprüche, wobei die HV-Steckverbindung einen kabelseitigen Verbinder (10) und einen aggregatseitigen Verbinder (10) aufweist, wobei der kabelseitige Verbinder und/oder der aggregatseitige Verbinder einen Haltemechanismus aufweist, dessen Haltekraft zumindest der Gewichtskraft des Kabelseitigen Verbinders entspricht.

10. HV-Steckverbinder nach Anspruch 9, wobei der Haltemechanismus eine Dichtung und ein Schirmelement (127) aufweist.

11. Kraftfahrzeug mit einem HV-Steckverbinder nach einem der vorstehenden Ansprüche.

12. Verfahren zum Herstellen einer HV-Steckverbindung eines HV-Steckverbinders nach einem der vorstehenden Ansprüche 1 bis 10 mit einem Verriegelungsmechanismus (129); einem ersten Verbinder (10), welcher wenigstens einen ersten Leistungskontakt (113) aufweist; und mit einem zweiten Verbinder (30), welcher wenigstens einen zweiten Leistungskontakt, wenigstens ein erstes Federelement (105), ein erstes HVIL-Kontaktelement (101) und ein zweites HVIL-Kontaktelement (103) aufweist;
welches die nachfolgenden Schritte enthält:
- Kontaktieren der ersten Leistungskontakte mit den zweiten Leistungskontakten;
- Verformen eines ersten Federelements durch das Kontaktieren der ersten Leistungskontakte mit den zweiten Leistungskontakten;
- Verriegeln der HV-Steckverbindung mittels dem Verriegelungsmechanismus;
- Herstellen eines Kontakts zwischen dem ersten HVIL-Kontaktelement und dem zweiten HVIL-Kontaktelement nach dem Verformen eines ersten Federelements und nach dem Verriegeln der HV-Steckverbindung;
- Übertragen von HV-Strom zwischen dem ersten Leistungskontakt und dem zweiten Leistungskontakt, während des erste HVIL-Kontaktelement mit dem zweiten HVIL-Kontaktelement verbunden ist.

13. Verfahren zum Herstellen einer HV-Steckverbindung nach Anspruch 12, wobei das Verfahren ferner einen der folgenden weiteren Schritte enthält:
- Kontaktieren des ersten HVIL-Kontaktelements in dem zweiten Verbinder mit einem dritten HVIL-Kontaktelement in dem ersten Verbinder, bevor HV-Strom übertragen wird.

14. Verfahren zum Herstellen einer HV-Steckverbindung nach Anspruch 12 oder 13, wobei die HV-Steckverbindung durch Verschrauben verriegelt wird.

## Claims

1. HV connector (30), in particular for a motor vehicle, which is arranged to supply HV power from the HV connector to a further component to be transferred to an HVIL system (20), to a cable-side connector (30), and to a unit-side connector (10),
wherein the HVIL system comprises a first HVIL contact element (101) and a second HVIL contact element (103), wherein the first HVIL contact element is spaced apart from the second HVIL contact element by at least one first spring element (105) in the non-plugged-in state of the HV connector
wherein the HVIL system comprises power contacts (121, 113), wherein the HVIL contact elements are brought into contact after the power contacts are brought into contact, and
wherein the first spring element is so deformed in a plugged-in state of the HV connector that the first HVIL contact element contacts the second HVIL contact element, and the HVIL system ensures that HV power is transferred from the HV connector to the further component, as long as the connection between the HV connector and the further component is maintained,
**characterized in that**
the HVIL system comprises a third HVIL contact element (107) in the unit-side connector, wherein the third HVIL contact element is designed to contact the first HVIL contact element and with a detection device to detect a contact between the first HVIL contact element and the second HVIL contact element, as well as between the first HVIL contact element and the third HVIL contact element.

2. HV connector according to claim 1, wherein the second HVIL contact element is in the form of a second spring element, in particular as a leaf spring.

3. HV connector according to one of the preceding claims, wherein the HV connector has a cable-side connector (30) and a unit-side connector (10) and wherein the first HVIL contact element, the second HVIL contact element, and the first spring element are arranged in the cable-side connector.

4. HV connector according to one of the preceding claims, wherein the third HVIL contact element is formed in a sleeve (109).

5. HV connector according to one of the preceding claims, wherein the first HVIL contact element is formed substantially L-shaped or pin-shaped.

6. HV connector according to one of the preceding claims, wherein the first and/or second HVIL contact element are/is formed horizontally offset from the first spring element.

7. HV connector according to one of the preceding claims, wherein the first HVIL contact element and the second HVIL contact element are formed between two or four first spring elements.

8. HV connector according to one of the preceding claims, wherein the first spring element comprises a leaf spring, a coil spring and/or an elastomeric block (111).

9. HV connector according to one of the preceding claims, wherein the HV connector comprises a cable-side connector (10) and a unit-side connector (10), wherein the cable-side connector and/or the unit-side connector have/has a holding mechanism whose holding force corresponds at least to the weight force of the cable-side connector.

10. HV connector according to claim 9, wherein the holding mechanism comprises a seal and a shielding element (127).

11. Motor vehicle with an HV connector according to one of the preceding claims.

12. Method for producing an HV connection of an HV connector according to one of the preceding claims 1 to 10 with a locking mechanism (129); a first connector (10) having at least a first power contact (113), a second connector (30) having at least a second power contact, at least one first spring element (105), a first HVIL contact element (101) and a second HVIL contact element (103); which contains the following steps:
- contacting the first power contacts with the second power contacts;
- deforming a first spring element by bringing the first power contacts into contact with the second power contacts,
- locking the HV connector by means of the locking mechanism
- establishing a contact between the first HVIL contact element and the second HVIL contact element after the deformation of a first spring element and after locking the HV connector,
- transferring HV current between the first power contact and the second power contact while the first HVIL contact element is connected to the second HVIL contact element.

13. Method for producing an HV connector according to claim 12, wherein the method further comprises one of the following further steps:
- contacting the first HVIL contact element in the second connector with a third HVIL contact element in the first connector before HV current is transferred.

14. Method for producing an HV connector according to claim 12 or 13, wherein the HV connector is locked by screwing.

## Revendications

1. Connecteur enfichable HV (30), plus particulièrement pour un véhicule à moteur, qui est conçu pour transmettre du courant HV du connecteur HV à un autre composant, avec un système HVIL (20), un connecteur côté câble (30) et avec un connecteur côté agrégat (10),
le système HVIL comprenant un premier élément de contact HVIL (101) et un deuxième élément HVIL (103), le premier élément de contact HVIL étant écarté, dans un état non enfiché du connecteur enfichable HV, du deuxième élément de contact HVIL par au moins un premier élément de ressort (105),
le système HVIL comprenant des contacts de puissance (121, 113), les éléments de contact HVIL étant mis en contact après la mise en contact des contacts de puissance et
le premier élément de ressort étant, dans un état enfiché du connecteur enfichable HV, déformé de façon à ce que le premier élément de contact HVIL soit en contact avec le deuxième élément de contact HVIL,
de façon à ce que le système HVIL garantisse qu'un courant HV soit transmis du connecteur enfichable HV à l'autre composant si la liaison entre le connecteur enfichable HV et l'autre composante est assurée,
**caractérisé en ce que**
le système HVIL comprend un troisième élément de contact HVIL (107) dans le connecteur côté agrégat, le troisième élément de contact HVIL étant conçu pour entrer en contact avec le premier élément de contact HVIL et étant relié avec un dispositif de détection pour la vérification d'un contact entre le premier élément de contact HVIL et le deuxième élément de contact HVIL ainsi qu'entre le premier élément de contact HVIL et le troisième élément de contact HVIL.

2. Connecteur enfichable HV selon la revendication 1, le deuxième élément de contact HVIL étant conçu comme un deuxième élément de ressort, plus particulièrement comme un ressort à lames.

3. Connecteur enfichable HV selon l'une des revendications précédentes, la liaison enfichable HV comprenant un connecteur côté câble (30) et un connecteur côté agrégat (10) et le premier élément de contact HVIL, le deuxième élément de contact HVIL et le premier élément de ressort étant disposés dans le connecteur côté câble.

4. Connecteur enfichable HV selon l'une des revendications précédentes, le troisième élément de contact HVIL étant réalisé dans une douille (109).

5. Connecteur enfichable HV selon l'une des revendications précédentes, le premier élément de contact HVIL présentant globalement la forme d'un L ou la forme d'une goupille.

6. Connecteur enfichable HV selon l'une des revendications précédentes, le premier et/ou le deuxième élément de contact HVIL étant décalé horizontalement par rapport au premier élément de ressort.

7. Connecteur enfichable HV selon l'une des revendications précédentes, le premier élément de contact HVIL et le deuxième élément de contact HVIL étant réalisés entre deux ou quatre premiers éléments de ressorts.

8. Connecteur enfichable HV selon l'une des revendications précédentes, le premier élément de ressort comprenant un ressort à lames, un ressort en spirale et/ou un bloc d'élastomère (111).

9. Connecteur enfichable HV selon l'une des revendications précédentes, la liaison enfichable HV comprenant un connecteur côté câble (10) et un connecteur côté agrégat (10), le connecteur côté câble et/ou le connecteur côté agrégat comprenant un mécanisme de maintien dont la force de maintien correspond au moins au poids du connecteur côté câble.

10. Connecteur enfichable HV selon la revendication 9, le mécanisme de maintien comprenant un joint d'étanchéité et un élément de blindage (127).

11. Véhicule à moteur avec un connecteur enfichable HV selon l'une des revendications précédentes.

12. Procédé de fabrication d'une liaison enfichable HV d'un connecteur enfichable HV selon l'une des revendications précédentes 1 à 10 avec un mécanisme de verrouillage (129) ; un premier connecteur (10), qui comprend au moins un premier contact de puissance (113) ; et avec un deuxième connecteur (30) qui comprend au moine un deuxième contact de puissance, au moins un premier élément de ressort (105), un premier élément de contact HVIL (101) et un deuxième élément de contact HVIL (103) ;
qui comprend les étapes suivantes :
- mise en contact des premiers contacts de puissance avec les deuxièmes contacts de puissance ;
- déformation d'un premier élément de ressort par la mise en contact des premiers contacts de puissance avec les deuxièmes contacts de puissance ;
- verrouillage de la liaison enfichable HV au moyen du mécanisme de verrouillage ;
- établissement d'un contact entre le premier élément de contact HVIL et le deuxième élément de contact HVIL après la déformation d'un premier élément de ressort et après le verrouillage de la liaison enfichable HV ;
- transmission d'un courant HV entre le premier contact de puissance et le deuxième contact de puissance, tandis que le premier élément de contact HVIL est relié avec le deuxième élément de contact HVIL.

13. Procédé d'établissement d'une liaison enfichable HV selon la revendication 12, ce procédé comprenant en outre une des étapes supplémentaires suivantes :
- mise en contact du premier élément de contact HVIL dans le deuxième connecteur avec un troisième élément de contact HVIL dans le premier connecteur, avant qu'un courant HV soit transmis.

14. Procédé d'établissement d'une liaison enfichable HV selon la revendication 12 ou 13, la liaison enfichable HV étant verrouillé par vissage.
